(19) **Europäisches Patentamt / European Patent Office / Office européen des brevets**

(11) **EP 3 101 624 B1**

(12) # EUROPEAN PATENT SPECIFICATION

(45) Date of publication and mention
of the grant of the patent:
**04.12.2019 Bulletin 2019/49**

(51) Int Cl.:
*H04N 5/76* (2006.01)    *G06T 5/00* (2006.01)
*G06T 5/50* (2006.01)

(21) Application number: **15800270.9**

(22) Date of filing: **28.05.2015**

(86) International application number:
**PCT/CN2015/080021**

(87) International publication number:
**WO 2015/180659 (03.12.2015 Gazette 2015/48)**

(54) **IMAGE PROCESSING METHOD AND IMAGE PROCESSING DEVICE**

BILDVERARBEITUNGSVERFAHREN UND BILDVERARBEITUNGSVORRICHTUNG

PROCÉDÉ DE TRAITEMENT D'IMAGE ET DISPOSITIF DE TRAITEMENT D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2014 CN 201410230506**

(43) Date of publication of application:
**07.12.2016 Bulletin 2016/49**

(73) Proprietor: **Huawei Technologies Co. Ltd.
Shenzhen, Guangdong 518129 (CN)**

(72) Inventor: **XU, Jing
Shenzhen
Guangdong 518129 (CN)**

(74) Representative: **Gill Jennings & Every LLP
The Broadgate Tower
20 Primrose Street
London EC2A 2ES (GB)**

(56) References cited:
CN-A- 102 314 683    CN-A- 103 002 218
CN-A- 104 281 397    US-A1- 2008 131 019
US-A1- 2008 131 019    US-A1- 2010 128 145
US-A1- 2013 329 068

• Ng Ren: "Digital light field photography", Dissertation Dpeartment of Computer Scirence, Stanford University, 1 July 2006 (2006-07-01), pages 1-203, XP055010130, Retrieved from the Internet: URL:http://testcis.cis.rit.edu/~cnspci/ref erences/dip/light_field_photography/ng2006 .pd f [retrieved on 2011-10-20]

• Keita Takahashi ET AL: "All in-Focus View Synthesis from Under-Sampled Light Fields", Proceedings of ICAT 2003, 3 December 2003 (2003-12-03), XP055236923, Retrieved from the Internet: URL:http://www.ic-at.org/ICAT2003/php/uplo ad/088_camera_5d8100c4b89569ec689363b4ef9 3 bd9c.pdf [retrieved on 2015-12-16]

• KODAMA KAZUYA ET AL: "Efficient Reconstruction of All-in-Focus Images Through Shifted Pinholes From Multi-Focus Images for Dense Light Field Synthesis and Rendering", IEEE TRANSACTIONS ON IMAGE PROCESSING, IEEE SERVICE CENTER, PISCATAWAY, NJ, US, vol. 22, no. 11, 1 November 2013 (2013-11-01), pages 4407-4421, XP011526863, ISSN: 1057-7149, DOI: 10.1109/TIP.2013.2273668 [retrieved on 2013-09-12]

• PERTUZ S ET AL: "Generation of All-in-Focus Images by Noise-Robust Selective Fusion of Limited Depth-of-Field Images", IEEE TRANSACTIONS ON IMAGE PROCESSING, IEEE SERVICE CENTER, PISCATAWAY, NJ, US, vol. 22, no. 3, 1 March 2013 (2013-03-01), pages 1242-1251, XP011498231, ISSN: 1057-7149, DOI: 10.1109/TIP.2012.2231087

- KUBOTA A ET AL: "Registration and blur estimation methods for multiple differently focused images", IMAGE PROCESSING, 1999. ICIP 99. PROCEEDINGS. 1999 INTERNATIONAL CONFERENCE ON - KOBE, JAPAN 24-28 OCT. 1999, IEEE, PISCATAWAY, NJ, USA, vol. 2, 24 October 1999 (1999-10-24), pages 447-451, XP010368996, DOI: 10.1109/ICIP.1999.822936 ISBN: 978-0-7803-5467-8
- Aamir Saeed Malik: "Comparison of focus measures under the influence of various factors effecting their performance" In: Aamir Saeed Malik: "Depth Map and 3D Imaging Applications: Algorithms and Technologies: Algorithms and Technologies", 30 November 2012 (2012-11-30), Information Science Reference, US, XP009503821, ISBN: 978-1-61350-326-3 pages 165-168, DOI: 10.4018/978-1-61350-326-3.ch009, * p. 165. p. 167, paragraph "Moment-Based Focus Measures". *

**Description**

**TECHNICAL FIELD**

The present invention relates to the field of image processing technologies, and in particular, to an image processing method and an image processing apparatus.

**BACKGROUND**

In common photography, to highlight a subject scene, a camera is usually focused on a depth plane in which the subject scene is located, so that the subject scene is clearly imaged on a sensor, but imaging of an object in another depth plane is blurry.

With development of a digital imaging technology, image processing, and machine vision, a refocusing technology emerges. According to the refocusing technology, after an image is formed, according to a user need, a focusing plane or a depth of field may be reselected, where the depth of field refers to a scope in which an imaging device can provide clear imaging.

For example, the refocusing technology is used in a light field camera. A micro lens array is included in the light field camera. When shooting is performed, each micro lens in the micro lens array forms an image on a sensor, and therefore an image array is obtained. In addition, the image array may be processed by using a refocusing algorithm, so as to obtain a refocused image of a depth plane. After the refocused image is formed, a user can obtain a focused image of a scene in one depth plane according to a need each time. In this way, the user can view a clear image of a scene only in one depth plane, while an image, which is viewed by the user, of a scene in another depth plane is blurry.

Ng Ren published a dissertation thesis tilted, "Digital light field photography", Dissertation Department of Computer Science, Stanford University, 1 July 2006 (2006-07-01) which specifically analyses the light field inside the light camera and discusses various refocusing techniques based thereon. Keita Takahashi et al. published a paper titled, "All in-Focus View Synthesis from Under-Sampled Light Fields" Proceedings of ICAT 2003, 3 December 2003 which discusses techniques for applying the refocusing techniques of light field photography to under-sampled image data acquired using densely spaced conventional cameras. Kodama Kazuya et al. published a paper titled, "Efficient Reconstruction of All-in-Focus Images Through Shifted Pinholes From Multi-Focus Images for Dense Light Field Synthesis and Rendering", IEEE Transactions on Image Processing, IEEE Service Center, Piscataway, NJ, US, volume 22, no. 11, 1 November 2013 which discusses using techniques of pinhole shifting to obtain multi-focus images. Pertuz et al. published a paper titled, "Generation of All-in-Focus Images by Noise-Robust Selective Fusion of Limited Depth-of-Field Images" IEEE 1RANSACTIONS ON IMAGE PROCESSING, VOL. 22, NO. 3, MARCH 2013, which discusses aspects related to noise reduction while synthesising all-in-focus images. Kubota et al. published a paper titled, "Registration and blur estimation methods for multiple differently focused images", IMAGE PROCESSING. 1999. ICIP 99. PROCEEDINGS. 1999 INTERNATIONAL CONFERENCE ON - KOBE. JAPAN 24-28 OCT 1999, IEEE PISCATAWAY, NJ, USA, volume 2, 24 October 1999 discussing techniques related to registration and blur estimation for multiple differently focused images.

**SUMMARY**

Embodiments of the present invention provide an image processing apparatus, so that clear images of scenes in multiple depth planes can be simultaneously obtained.

In particular, the image processing apparatus of the present invention is defined in claim 1. Further technical features are defined in the dependent claims.

In the technical solutions of the present invention, a refocused image of multiple depth planes may be generated according to depth information. Because the refocused image of the multiple depth planes includes focused parts of multiple refocused images, the focused parts of the multiple refocused images can be simultaneously displayed, and therefore clear images of scenes in the multiple depth planes can be simultaneously obtained.

**BRIEF DESCRIPTION OF DRAWINGS**

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic flowchart of an image processing method according to an embodiment of the present invention;

FIG. 2 is a schematic flowchart of an image processing process according to another embodiment of the present invention;

FIG. 3 shows a schematic diagram of a correspondence between a depth plane and a user input;

FIG. 4 is a schematic diagram of two planes in a double-plane representation method according to an embodiment of the present invention;

FIG. 5 is a schematic diagram of a principle of synthetic image photography according to an embodiment of the present invention;

FIG. 6 is a schematic diagram of a geometrical relationship of a model of a principle of synthetic image photography according to an embodiment of the present invention;

FIG. 7 is a schematic flowchart of an image processing process according to still another embodiment of the present invention;

FIG. 8 is a schematic flowchart of an image processing process according to another embodiment of the present invention;

FIG. 9 is a schematic flowchart of an image processing process according to still another embodiment of the present invention;

FIG. 10 is a schematic structural diagram of an image processing apparatus according to an embodiment of the present invention; and

FIG. 11 is a schematic structural diagram of an image processing apparatus according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the embodiments of the present invention, a depth may refer to a distance between a scene and a camera. Multiple depth planes may be continuous in depth, which are not limited in the embodiments of the present invention, for example, the multiple depth planes may also be discontinuous in depth. It should be understood that each depth plane may be corresponding to one focusing plane, and may also be corresponding to one depth of field. It should be noted that the "multiple" in this specification includes two or more.

The embodiments of the present invention may be applied to a camera, or may be applied to another user terminal (such as a mobile phone or a computer), and the camera or the another user terminal is configured to process raw data of a refocused image, so as to generate a refocused image of multiple depth planes.

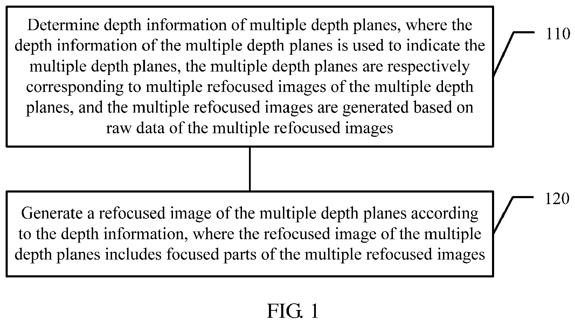

FIG. 1 is a schematic flowchart of an image processing method according to an embodiment of the present invention. The method in FIG. 1 may be executed by an image processing apparatus. The method in FIG. 1 includes the following content.

110. Determine depth information of multiple depth planes, where the depth information of the multiple depth planes is used to indicate the multiple depth planes, the multiple depth planes are respectively corresponding to multiple refocused images of the multiple depth planes, and the multiple refocused images are generated based on raw data of the multiple refocused images.

The depth information may include at least one of information about depth planes, information about pixel coordinates, information about pixel colors, information about a point spread function of pixels, light field information of light rays corresponding to pixels, or trace information of light rays corresponding to pixels, or any combination of them. A manner for determining the depth information of the multiple depth planes is not limited in this embodiment of the present invention. The depth information may come from user inputs or may be predefined.

The image processing apparatus may obtain, according to user inputs or predefined inputs, depth planes corresponding to regions that need to be refocused. For example, the depth planes corresponding to the regions that need to be refocused are determined according to real-time inputs or selections of a user on a user interface. When the user selects multiple regions on the user interface, where the multiple regions are corresponding to depth planes, the image processing apparatus may learn, according to this, the depth planes corresponding to the regions that need to be refocused. According to this embodiment of the present invention, the manner for determining the depth information of the multiple depth planes is not limited thereto, and the image processing apparatus may also determine the depth information of the multiple depth planes according to predefined information.

120. Generate a refocused image of the multiple depth planes according to the depth information, where the refocused image of the multiple depth planes includes focused parts of the multiple refocused images.

For example, in a refocused image corresponding to each depth plane, a part of the image is focused, that is, the part of the image is clear, but another part of the image is not focused, that is, the another part of the image is blurry. Determining the depth information of the multiple depth planes is to determine depth planes in which images need to be refocused. In this case, a process of generating the refocused image of the multiple depth planes may be combining the focused parts corresponding to the multiple depth planes. In addition, in the generated refocused image of the multiple depth planes, the focused parts and non-focused parts that are corresponding to the multiple depth planes may be combined, and therefore a complete image can be presented.

According to this embodiment of the present invention, a refocused image of multiple depth planes may be generated according to depth information. Because the refocused image of the multiple depth planes includes focused parts of multiple refocused images, the focused parts of the multiple refocused images can be simultaneously displayed, and therefore clear images of scenes in the multiple depth planes can be simultaneously obtained.

In 120, the image processing apparatus may determine the raw data of the multiple refocused images according to the depth information of the multiple depth planes, and generate the refocused image of the multiple depth planes according to the raw data of the multiple refocused images, where the refocused image of the multiple depth planes includes the focused parts of the multiple refocused images.

For example, the raw data of the refocused images corresponding to the depth planes may be determined according to the depth information input by the user, or the depth planes that need to be refocused and the raw data of the refocused images corresponding to the depth planes may be determined according to the predefined depth information. A method for obtaining the information about the refocused depth planes according to the user inputs or the predefined input may vary according to a type of the raw data.

The image processing apparatus may generate the focused parts according to the raw data of the refocused images, may generate non-focused parts according to the raw data of the refocused images, or may generate both the focused parts and the non-focused parts according to the raw data of the refocused images. For example, the raw data may be obtained by means of shooting by a camera module (for example, a light field camera) that is provided with a micro lens array. Each depth plane has raw data of a refocused image of the depth plane, and the raw data is used to generate, according to a need, the refocused image corresponding to the depth plane.

According to this embodiment of the present invention, a refocused image of multiple depth planes may be generated according to raw data of multiple refocused images corresponding to the multiple depth planes. Because the refocused image of the multiple depth planes includes focused parts of the multiple refocused images, the focused parts of the multiple refocused images can be simultaneously displayed, and therefore clear images of scenes in the multiple depth planes can be simultaneously obtained. In addition, because the refocused image that is of the multiple depth planes and that is corresponding to the foregoing multiple depth planes is generated based on the raw data according to depth information, there is no need to generate all refocused images. Therefore, a large amount of storage space is saved.

It should be understood that the raw data of the foregoing refocused images may be any data used to generate a refocused image, including but not limited to the following image data or a combination of the following image data.

For example, the foregoing raw data may be one or more images shot by a common camera module. The foregoing more images refer to images shot for a same scene under different shooting parameter settings, for example, different focal lengths, different apertures, different exposures, and different sensed wavelengths; or refer to images shot for a same scene in different locations.

Alternatively, in another embodiment, the foregoing raw data may be one or more aperture coded images shot by a camera module that is provided with an aperture mask plate, a phase mask plate, or a mask plate of another type. Further, the foregoing raw data may further be images obtained by processing the aperture coded images by using various image processing algorithms.

Alternatively, in another embodiment, the foregoing raw data may be one or more image arrays shot by a camera module that is provided with a micro lens array or an aperture array. Further, the foregoing raw data may further be images obtained by processing the image arrays by using various image processing algorithms, for example, a refocused image of a single depth plane, a fully focused image, and a virtual pinhole image.

Alternatively, in another embodiment, the foregoing raw data may be one or more image arrays shot by an image shooting array constituted by multiple camera modules that are provided with same or different configurations. Further, the foregoing raw data may further be images obtained by processing the image arrays by using various image processing algorithms.

Alternatively, in another embodiment, the foregoing raw data may be a combination of depth information and images that are respectively obtained by a depth sensing device and a camera module for a same scene. The depth sensing device includes all devices that implement depth sensing by using a principle such as a time of flight of light, a phase difference of light, or structured lighting.

In 120, the image processing apparatus may perform refocusing processing based on the raw data of the multiple refocused images by using a refocusing algorithm, so as to generate the multiple refocused images, and combine the multiple refocused images, so as to generate the refocused image of the multiple depth planes.

According to this embodiment of the present invention, the refocusing algorithm may be a convolution algorithm, a deconvolution algorithm, a fusion algorithm, a splicing algorithm, a light ray trace algorithm, a filtering algorithm, another refocusing algorithm of a single depth plane, or a combination of these algorithms.

In 120, the focused parts of the multiple refocused images are combined by using an image fusion (Image Fusion) method.

For example, the image fusion method is an image analysis method. The image processing apparatus may combine two or more images into one image by using the image fusion method. Because information about multiple images of a same scene is redundant and complementary, a synthetic image obtained by using the image fusion method may represent the images more comprehensively and precisely. The image fusion method includes a grayscale-based algorithm (such as a direct average method, a weighted average method, a median filtering method, or a multi-resolution spline technology), an image fusion algorithm based on a region of interest, a fusion algorithm based on color space transform, and a fusion algorithm based on a transform domain.

In 120, when combining the focused parts of the multiple refocused images by using the image fusion method, the image processing apparatus may determine a point spread function of pixels of the multiple refocused images, generate a fusion weight template according to the point spread function of the pixels, and perform image fusion on the multiple refocused images according to the fusion weight template, where the fusion weight template includes fusion weights of the pixels, and a fusion weight of a pixel of a high focusing degree is greater than a fusion weight of a pixel of a low focusing degree. That is, a focusing degree of a pixel is proportional to a fusion weight. In this way, the focused parts corresponding to the multiple depth planes are clearly presented.

For example, a focusing degree is also referred to as a degree of clearness, and a level of the focusing degree may be measured by using a point spread function. In addition, the focusing degree may be evaluated by using a focusing evaluation function.

According to this embodiment of the present invention, each refocused image in the multiple refocused images includes focused parts and non-focused parts. In 120, when the multiple refocused images are combined, the focused parts and the non-focused parts may be selected from each refocused image in the multiple refocused images, and the focused parts and the non-focused parts are spliced. For example, the focused parts and the non-focused parts may be selected from each refocused image in the multiple refocused images.

Alternatively, an image may be randomly selected, and the focused parts of the multiple refocused images corresponding to the multiple depth planes are fused with the image, so that a transition between the focused parts and the non-focused parts is more natural.

In 120, focused parts and non-focused parts that are of each refocused image in the multiple refocused images are generated according to the raw data of the multiple refocused images, and the focused parts and the non-focused parts are spliced.

That is, the focused parts and the non-focused parts are directly generated based on the raw data. In this case, a step of capturing the focused parts and the non-focused parts is saved, and an image processing process is simplified.

According to this embodiment of the present invention, in 120, the image processing apparatus may further generate, according to raw data of refocused images of all depth planes, the refocused images corresponding to all the depth planes, select the refocused images of the multiple depth planes from the refocused images of all the depth planes according to the depth information of the multiple depth planes, and generate the refocused image of the multiple depth planes according to the refocused images of the multiple depth planes, where all the depth planes are respectively corresponding to the refocused images of all the depth planes, and the refocused image of the multiple depth planes includes the focused parts of the multiple refocused images.

That is, before the depth information is determined and the refocused image of the multiple depth planes is generated, all the refocused images are pre-generated. In this way, the corresponding refocused images may be selected from the pre-generated refocused images after the depth information is determined, thereby shortening a time of generating the refocused image of the multiple depth planes, and enhancing user experience.

According to this embodiment of the present invention, in 120, the image processing apparatus may determine a point spread function of pixels of all the refocused images; generate a fusion weight template according to the point spread function of the pixels of all the refocused images, where the fusion weight template includes fusion weights of the pixels of all the refocused images, fusion weights of pixels of the multiple refocused images are greater than fusion weights of pixels of other refocused images except the multiple refocused images in all the refocused images, and a fusion weight of a pixel of a high focusing degree in the multiple refocused images is greater than a fusion weight of a pixel of a low focusing degree in the multiple refocused images; and perform image fusion on all the refocused images according to the fusion weight template.

That is, the fusion weights that are of the multiple refocused images and that are determined according to the depth information are greater than the weights of the other refocused images, and for the multiple refocused images, a focusing degree of a pixel is proportional to a fusion weight. In this way, the focused parts corresponding to the multiple depth planes are clearly presented.

According to this embodiment of the present invention, in 120, the image processing apparatus may select focused parts and non-focused parts from each refocused image in the multiple refocused images, and splice the focused parts and the non-focused parts.

Alternatively, in another embodiment, the method in FIG. 1 further includes: selecting focused parts and non-focused parts from each refocused image in all the refocused images; storing the focused parts and the non-focused parts in query tables by using a depth of a depth plane or pixel coordinates as an index; and querying the focused parts and non-focused parts that are of the refocused images of the multiple depth planes from the query tables by using the depth of the depth plane or the pixel coordinates as the index, where the generating the refocused image of the multiple depth planes according to the refocused images of the multiple depth planes includes: splicing the focused parts and the non-focused parts that are of the refocused images of the multiple depth planes.

For example, the depth of the depth plane is a distance between each depth plane and a reference plane (for example, a camera), and each depth plane may be corresponding to one depth distance. A part that is on an image and that is corresponding to each depth plane may include multiple pixels. Coordinates of each pixel may be corresponding to one depth plane. Each depth plane may be corresponding to coordinates of multiple pixels. A correspondence between the depth of the depth plane or the pixel coordinates and the focused parts, and/or a correspondence between the depth of the depth plane or the pixel coordinates and the non-focused parts may be established before the focused parts and the non-focused parts are spliced, and the foregoing correspondences are stored in the query tables. Timing for establishing the correspondences is not limited in this embodiment of the present invention, for example, the correspondences may be established in a shooting process or after a shooting process, or may be established at any time before the focused parts and the non-focused parts are spliced. For example, a correspondence between the focused parts of all the depth planes and the depth of the depth plane or the pixel coordinates, and a correspondence between the non-focused parts of all the depth planes and the depth of the depth plane or the pixel coordinates may be pre-established. In this way, when the user inputs are received on the user interface, the depth of the depth plane or the pixel coordinates may be first determined according to the user inputs, then the focused parts and the non-focused parts may be acquired from the query tables according to the depth of the depth plane or the pixel coordinates, and the focused parts and the non-focused parts are spliced into the refocused image of the multiple depth planes, thereby enhancing user experience. In addition, to save storage space, a correspondence between a focused part and a non-focused part that are of raw data corresponding to a depth plane selected by the user and the depth of the depth plane or the pixel coordinates may be stored alone.

According to this embodiment of the present invention, when the focused parts and the non-focused parts are spliced, pre-processing, image registration, and image fusion may be performed on images of the focused parts and images of the non-focused parts.

Alternatively, in another embodiment, the method in FIG. 1 further includes: displaying a refocused image in the multiple refocused images, acquiring multiple user inputs in multiple regions of the displayed refocused image, and outputting the generated refocused image of the multiple depth planes on a display device, where the multiple user inputs are corresponding to the multiple depth planes, and when the depth information is determined, the depth information of the multiple depth planes may be determined according to the multiple user inputs.

For example, before the refocused image of the multiple depth planes is displayed, a refocused image of a single depth plane may be displayed on a user interface. The image processing apparatus may perform refocusing on objects in multiple different depth planes or objects in multiple discontinuous depth planes according to a user need, and output the refocused image of the multiple depth planes on the display device, or output images of refocused scenes in the different depth planes. In this embodiment of the present invention, the generated refocused image of the multiple depth planes may be displayed alone, or original images and/or the refocused images that are of the different depth planes and that are generated in intermediate states before the refocused image of the multiple depth planes is generated completely may be displayed.

Optionally, in another embodiment, after the refocused image of the multiple depth planes is generated, the refocused image of the multiple depth planes is immediately displayed on a user interface.

According to this embodiment of the present invention, the user inputs are one of the following: single-point tap inputs, multi-point tap inputs, single-point sliding inputs, or multi-point sliding inputs on a touchscreen by a user; user postures probed by a posture sensor on an input device; or user actions probed by an action tracking module on an input device.

In 110, the multiple depth planes corresponding to a predefined input may be determined according to the predefined input. The method in FIG. 1 further includes: outputting, on a display device, the refocused image of the multiple depth planes corresponding to the predefined input.

The following describes the embodiments of the present invention in more detail with reference to specific examples.

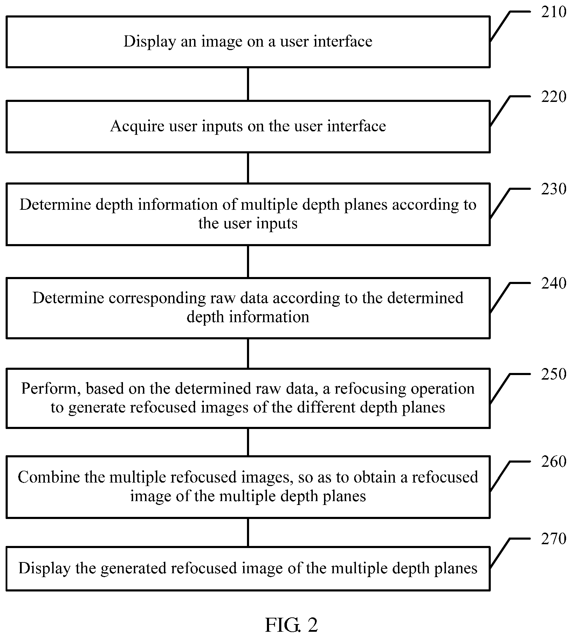

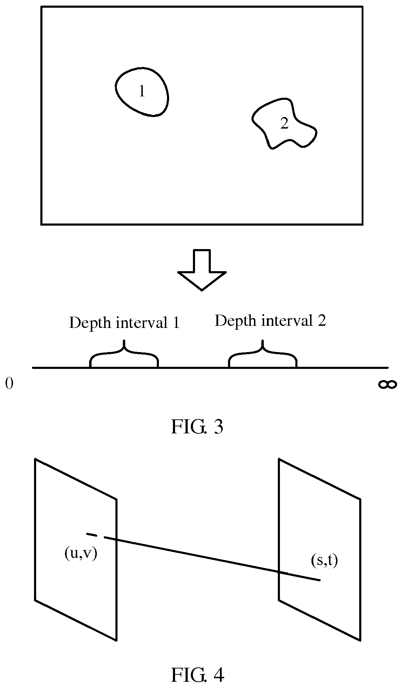

FIG. 2 is a schematic flowchart of an image processing process according to another embodiment of the present invention. The embodiment in FIG. 2 is an example of the image processing method in FIG. 1. FIG. 3 shows a schematic diagram of a correspondence between a depth plane and a user input region.

210. Display an image on a user interface.

For example, an image may be displayed on a user interface of a user device (for example, a camera). The image may be a common image. The image may display scenes located in different depth planes, but can clearly display a scene only in a depth plane. The user device may store raw data of refocused images of different depth planes. A region or a location of each scene on the image is corresponding to a depth plane in which the scene is located.

220. Acquire user inputs on the user interface.

For example, when a user taps or touches multiple regions or locations of the image displayed on the user interface, the user inputs may be received in the multiple regions or locations. The foregoing user inputs may be discontinuous instructions input by the user by using an input device, for example, a click on a mouse, a double-click on a mouse, pressing a button, or gently pressing a stylus on a touchscreen. Alternatively, the foregoing user inputs may be continuous instructions input by the user by using an input device, for example, simply moving a mouse and recording a location of the mouse, thereby implementing a continuous click action. The input device in this embodiment of the present invention may be a mouse, a touchpad, a multi-finger sensing touchscreen, a tablet or a stylus used on a screen, an eye tracking device, a joystick, a four-way button navigation control device, a pressure-sensitive direction navigation control device, a slider, a scroll wheel, a round touchpad, an infrared somatosensory device, or the like.

It should be understood that multiple depth planes may constitute a depth interval. Therefore, the multiple depth planes may be selected in a manner of selecting multiple depth intervals. Referring to FIG. 3, a region 1 and a region 2 that are on the image displayed on the user interface are corresponding to a depth interval 1 and a depth interval 2 respectively. In this way, a user may select, by selecting the regions corresponding to the two depth intervals, depth planes corresponding to the two depth intervals. It should be understood that the user may select or tap more regions or locations on the image, so as to obtain refocused images of more depth planes.

230. Determine depth information of multiple depth planes according to the user inputs.

The depth information is used to indicate information about the multiple depth planes that need to be refocused. The depth information may include at least one of information about depth planes, information about pixel coordinates, information about pixel colors, information about a point spread function of pixels, light field information of light rays corresponding to pixels, or trace information of light rays corresponding to pixels, or any combination of them.

Raw data of refocused images may be one or more image arrays shot by a camera module that is provided with a micro lens array or an aperture array; one or more image arrays shot by an image shooting array constituted by multiple camera modules that are provided with same or different configurations; or multiple images shot by a single camera module for a same scene in different locations. Because visual difference information in an image array includes depth information of a scene, depth information of a pixel may be obtained by using a method such as a block matching method, a graph cuts (Graph Cuts) method, or a multi-baseline (Multi-Baseline) method, so as to obtain required depth plane information. Depth information (for example, a correspondence between a depth and pixel coordinates) about an object point corresponding to each pixel may be obtained by using a depth extraction method. The user inputs may indicate coordinates of selected pixels. The information about the selected depth planes may be obtained based on the coordinates of the pixels selected by a user.

Raw data of refocused images may be multiple images shot by a single common camera module. The multiple images refer to images shot for a same scene under different parameter settings, for example, different focal lengths of a lens, different apertures, different exposures, different distances between a lens and a sensor, different distances between lenses, different curvatures of lenses, or different sensed wavelengths. Because focusing degrees of an image and/or light strength information are/is different when a scene is in different depth planes, required depth plane information may be obtained by using such information. For example, the user inputs indicate information about pixel coordinates. Different focusing degrees of pixels are corresponding to different depth information, and therefore the information about the depth planes selected by a user may be obtained according to the user inputs.

Raw data of refocused images may also be one or more aperture coded images shot by a camera module that is provided with an aperture mask plate, a phase mask plate, or a mask plate of another type. Because coded images are different when an object is in different depth planes, required depth plane information may be obtained by using such information. For example, the user inputs indicate information about pixel coordinates, coded images generated based on pixels of different depths are different, and depth information of a pixel may be deduced from a feature of a coded image.

Raw data of refocused images may be a combination of depth information and images that are respectively obtained by a depth sensing device and a camera module for a same scene. The depth sensing device may be all devices that implement depth sensing by using a principle such as a time of flight of light, a phase difference of light, or structured lighting. Therefore, required depth plane information may be obtained by using a depth map provided by the depth sensing device. For example, the user inputs indicate information about selected pixel coordinates, and the information about the depth planes selected by a user may be determined provided that a correspondence (that is, a depth map) between the information about the pixel coordinates and depth information of the pixels is determined.

In the foregoing several methods, a mapping relationship or the correspondence between the information about the pixel coordinates and the depth information of the pixels is obtained in different manners.

240. Determine corresponding raw data according to the determined depth information.

The depth planes that need to be refocused may be determined according to the determined depth information, and therefore the raw data corresponding to these depth planes that need to be refocused may be determined.

250. Perform, based on the determined raw data, a refocusing operation to generate refocused images of the different depth planes (or planes).

Methods for generating the refocused images of the different depth planes include a convolution algorithm, a deconvolution algorithm, a fusion algorithm, a splicing algorithm, a light ray trace algorithm, a filtering algorithm, a refocusing algorithm of a single depth plane, or any combination of the foregoing algorithms. According to different refocusing algorithms, before the refocused images of the different depth planes are generated, a focusing degree of a pixel, a radius of a circle of confusion, a point spread function, a gradient, a strength difference, or a structure tensor, or any combination of them may be acquired. The focusing degree of the pixel, the radius of the circle of confusion, the point spread function, the gradient, the strength difference, and the structure tensor may be calculated by means of convolution, deconvolution, Fourier Transform, inverse Fourier Transform, interpolation, or derivation, or any combination of them, or may be obtained by using a method such as machine learning, statistics, or theory emulation.

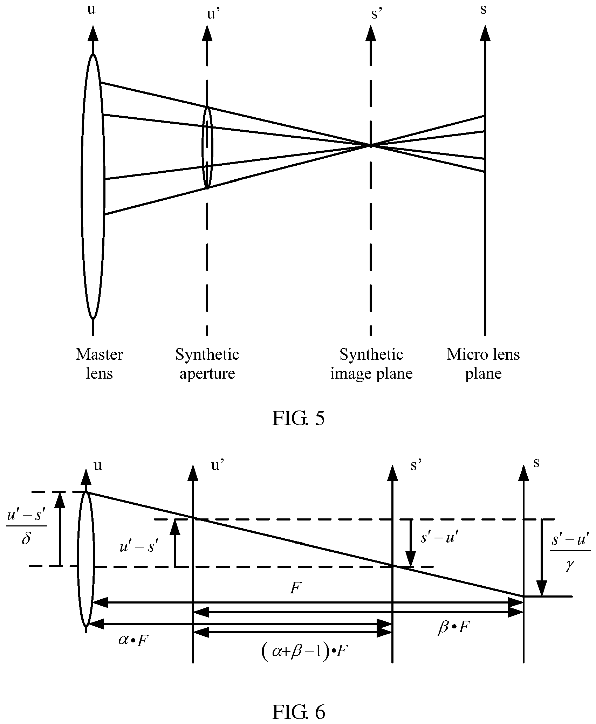

In this embodiment of the present invention, the refocused images of the different depth planes may be obtained by using a technology such as light field reconstruction, three-dimensional reconstruction, or a synthetic aperture. For details about a specific example of the refocusing operation, refer to an embodiment in FIG. 6.

To reduce an operation, only the refocused images corresponding to the multiple depth planes selected according to the user inputs are generated when the user inputs are received. This embodiment of the present invention is not limited thereto, for example, refocused images of all depth planes may be pre-generated, and then, when the user inputs are received, the refocused images of the multiple depth planes selected according to the user inputs may be directly selected from these refocused images.

260. Combine the multiple refocused images, so as to obtain a refocused image of the multiple depth planes.

In this embodiment of the present invention, the multiple refocused images may be combined by using an image fusion method. In the image fusion method, weight-based fusion may be used. In this embodiment of the present invention, fusion weights may be calculated before the refocused images of the different depth planes are fused. To reduce calculation, only the refocused images corresponding to the selected multiple depth planes are fused. Information about the fusion weights may be stored in a same file as the refocused images, or a fusion weight template or a query table may be separately formed and separately stored in another file.

Alternatively, in this embodiment of the present invention, the multiple refocused images may be combined by using an image splicing method.

270. Display the generated refocused image of the multiple depth planes.

For example, after generating the refocused images of the different depth planes, a camera may immediately display the generated refocused image of the multiple depth planes on a user interface. In addition, when the generated refocused image of the multiple depth planes is displayed, original images and/or the refocused images that are of the different depth planes and that are generated in intermediate states before the refocused image of the multiple depth planes is generated completely may also be displayed. For example, multiple images may be displayed in a split-screen manner on a same user interface.

It should be understood that a step of generating the refocused images of the different depth planes may be performed in any step before the refocused image of the multiple depth planes is obtained by means of synthesis, for example, may be performed in a shooting process, may be performed immediately after a shooting process is completed, or may be performed when the refocused image of the multiple depth planes needs to be obtained by means of synthesis, which is not limited in this embodiment of the present invention.

The following describes how to generate the refocused images of the different depth planes by using a light field camera as an example. FIG. 4 is a schematic diagram of two planes in a double-plane representation method according to an embodiment of the present invention. FIG. 5 is a schematic diagram of a principle of synthetic image photography according to an embodiment of the present invention. FIG. 6 is a schematic diagram of a geometrical relationship of a model of a principle of synthetic image photography according to an embodiment of the present invention.

The light field camera includes a master lens and an image sensor (which is not shown), and a micro lens array is disposed between the master lens and the image sensor. The image sensor records small images formed in each micro lens, and the multiple small images constitute an image array. The light field camera may be further provided with corresponding image processing software, so as to reconstruct the recorded image array into a common image form that can be accepted by a user and present effects of performing focusing on the different depth planes and effects of viewing a scene from different perspectives. After a shooting process is completed, the light field camera may perform, according to a user need and by using the software, refocusing on the depth planes selected by the user. A focusing depth of an image may not be fixed, and may be changed according to a user need. In addition to recording strength information of a light ray, the light field camera also records angle information of the light ray. The angle information of the light ray includes depth information of a scene in a scene. That is, the light field camera collects three-dimensional information (for example, three-dimensional light field data) about the scene. After acquiring the three-dimensional data about the scene, the light field camera may separately focus, according to a user need, the different depth planes by using a refocusing algorithm. When the user selects a region (the region may be corresponding to a depth plane in the scene) in the image displayed on the user interface, the camera may process the image by using the refocusing algorithm, and eventually present an effect of focusing on the selected depth plane. When the user selects multiple regions in the image displayed on the user interface, the camera may first generate, according to the raw data, the refocused images of the multiple depth planes corresponding to the multiple regions before the refocused image of the multiple depth planes is generated, and then fuse or splice the refocused images to obtain the refocused image of the multiple depth planes.

As shown in FIG. 4, the double-plane representation method may be used to represent a light field, that is, coordinates of a light ray L are coordinates of intersection points formed when the light ray is in two parallel planes u-v and s-t. For example, light field information collected by the light field camera is represented by using L (u, v, s, t), and light field information of a synthetic light field of the light field camera is represented by using L' (u', v', s', t'). A relationship between the light field information collected by the light field camera and the light field information of the synthetic light field is shown in FIG. 5.

A value of an irradiance image of a synthetic image plane is:

$$E(s', t') = \frac{1}{D^2} \iint L'(u', v', s', t') A(u', v') \cos^4\theta \, du \, dv \tag{1},$$

where

D is a distance between the synthetic image plane and a synthetic aperture; A is an aperture function, for example, a value inside an aperture is 1, and a value outside the aperture is 0; and $\theta$ is an incidence angle between the synthetic image plane and a light ray (u', v', s', t').

According to a principle of paraxial approximation, $\cos^4\theta$ in the foregoing formula may be ignored, and after $1/D^2$ is ignored, the following formula is obtained.

$$\overline{E}(s', t') = \iint L'(u', v', s', t') A(u', v') \, du \, dv \tag{2}$$

A relationship between L and L' is shown in FIG. 6, and the field information L (u, v, s, t) may be used to represent formula (2). According to the principle of synthetic image photography, the relationship between L and L' may be obtained as follows:

$$\gamma = \frac{\alpha + \beta - 1}{\alpha} \quad \text{and} \quad \delta = \frac{\alpha + \beta - 1}{\beta} \tag{3}$$

$$L'(u' v', s', t')$$
$$= L\left(s' + \frac{u' - s'}{\delta}, \; t' + \frac{v' - t'}{\delta}, \; u' + \frac{s' - u'}{\gamma}, \; v' + \frac{t' - v'}{\gamma}\right) \tag{4},$$

where

$\alpha$ represents a proportional coefficient of a distance between a master lens plane and the synthetic image plane; $\beta$ represents a proportional coefficient of a distance between a synthetic aperture plane and a micro lens plane.

A synthetic image photography formula is obtained according to formulas (4) and (2).

$$\overline{E}(s',t') = \iint L\left(s' + \frac{u'-s'}{\delta}, \ t' + \frac{v'-t'}{\delta}, \right.$$
$$\left. u' + \frac{s'-u'}{\gamma}, \ v' + \frac{t'-v'}{\gamma}\right) A(u',v') \, du \, dv$$

$$(5)$$

The refocused images of the different depth planes may be obtained by drawing images according to formula (5).

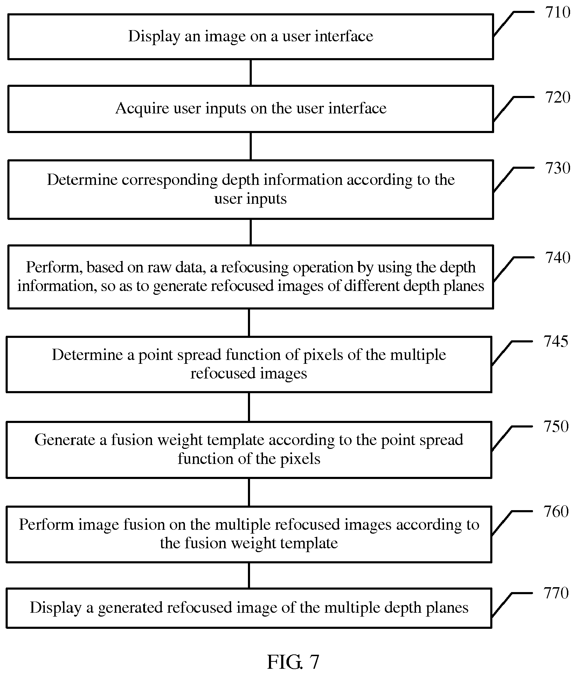

FIG. 7 is a schematic flowchart of an image processing process according to still another embodiment of the present invention. The embodiment in FIG. 7 is an example of the image processing method in FIG. 1, and detailed descriptions are appropriately omitted herein. Steps 710 to 740 in FIG. 7 are respectively similar to steps 210 to 240 in FIG. 2, and details are not described herein.

710. Display an image on a user interface.

720. Acquire user inputs on the user interface.

730. Determine corresponding depth information according to the user inputs.

740. Perform, based on raw data, a refocusing operation by using the depth information, so as to generate refocused images of different depth planes.

745. Determine a point spread function of pixels of the multiple refocused images.

750. Generate a fusion weight template according to the point spread function of the pixels.

760. Perform image fusion on the multiple refocused images according to the fusion weight template.

770. Display a generated refocused image of the multiple depth planes.

It should be understood that the step of determining a point spread function of pixels in step 745 may be replaced by a step of determining focusing degrees of the pixels, a radius of a circle of confusion, a gradient, a strength difference, a structure tensor, light field information of light rays corresponding to the pixels, or trace information of light rays corresponding to the pixels, or any combination of them. That is, the point spread function may be replaced by these parameters.

It should be understood that the step of determining a point spread function may be performed in any step before the fusion weight template is generated.

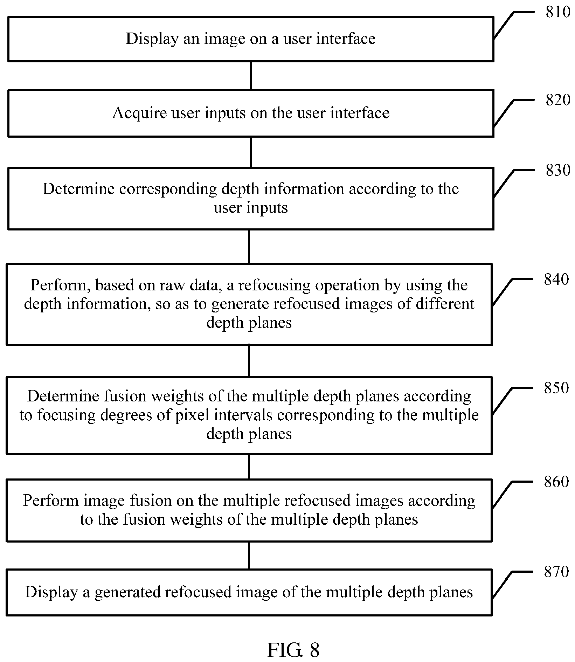

FIG. 8 is a schematic flowchart of an image processing process according to another embodiment of the present invention. The embodiment in FIG. 8 is an example of the image processing method in FIG. 1, and detailed descriptions are appropriately omitted herein. Steps 810 to 840 in FIG. 8 are respectively similar to steps 210 to 240 in FIG. 2, and details are not described herein.

810. Display an image on a user interface.

820. Acquire user inputs on the user interface.

830. Determine corresponding depth information according to the user inputs.

840. Perform, based on raw data, a refocusing operation by using the depth information, so as to generate refocused images of different depth planes.

850. Determine fusion weights of pixels according to focusing degrees of the pixels of the refocused images, where a fusion weight of a pixel of a high focusing degree is greater than a fusion weight of a pixel of a low focusing degree in a same refocused image.

860. Perform image fusion on the multiple refocused images according to the fusion weights of the multiple depth planes.

870. Display a generated refocused image of the multiple depth planes.

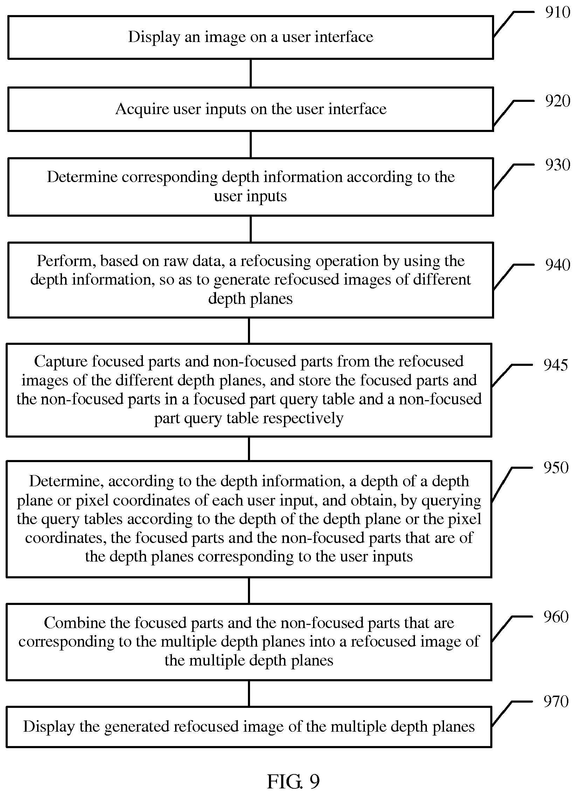

FIG. 9 is a schematic flowchart of an image processing process according to still another embodiment of the present invention. The embodiment in FIG. 9 is an example of the image processing method in FIG. 1, and detailed descriptions are appropriately omitted herein.

910. Display an image on a user interface. Step 910 is similar to step 210 in FIG. 2, and details are not described herein.

920. Acquire user inputs on the user interface. Step 920 is similar to step 220 in FIG. 2, and details are not described herein.

930. Determine corresponding depth information according to the user inputs.

For example, the depth information may include a depth of a depth plane or pixel coordinates, where the depth plane and the pixel coordinates are corresponding to each user input region. The pixel coordinates may be coordinates of any pixel in the region, for example, may be coordinates of a central point of the region.

940. Perform, based on raw data, a refocusing operation by using the depth information, so as to generate refocused images of different depth planes.

945. Capture focused parts and non-focused parts from the refocused images of the different depth planes, and store the focused parts and the non-focused parts in a focused part query table and a non-focused part query table respectively.

Alternatively, in another embodiment, refocused images of all depth planes may be pre-generated (for example, before the user inputs are received) according to raw data, and then the focused parts and the non-focused parts are captured from the refocused images of all the depth planes and are respectively stored in the focused part query table and the non-focused part query table; or focused parts and non-focused parts that are of all depth planes are pre-generated according to raw data, and the focused parts and the non-focused parts are respectively stored in the focused part query table and the non-focused part query table. In this case, steps 940 and 945 may be omitted.

In the foregoing focused part query table, a correspondence between a depth of a depth plane or pixel coordinates and the focused parts is stored. In the foregoing non-focused part query table, a correspondence between a depth of a depth plane or pixel coordinates and the non-focused parts is stored.

950. Determine, according to the depth information, a depth of a depth plane or pixel coordinates of each user input, and obtain, by querying the query tables according to the depth of the depth plane or the pixel coordinates, the focused parts and the non-focused parts that are of the depth planes corresponding to the user inputs.

960. Combine the focused parts and the non-focused parts that are corresponding to the multiple depth planes into a refocused image of the multiple depth planes.

In this embodiment of the present invention, the focused parts and the non-focused parts that are corresponding to the multiple depth planes may be combined into the refocused image of the multiple depth planes by using an image splicing method. For example, focused regions and non-focused regions may be captured from the images, and the refocused image of the multiple depth planes is generated by splicing the foregoing regions. Each focused region and each non-focused region separately include at least one pixel. An image splicing process mainly includes three steps: pre-processing, registration, and fusion. The pre-processing includes image denoising, image correction, and image projection. The image projection may be performed by using a plane projection method, a spherical projection method, a cube projection method, or a cylinder projection method. The image denoising may be performed by using a neighborhood average method, a spatial domain low-pass filtering method, or a spatial domain non-linear filtering method. The image correction may be a correction for a grayscale value deviation, or a correction for geometric deformation. For example, in a correction method for the grayscale value deviation, a normalized image grayscale value is:

$$\begin{cases} f' = \dfrac{f - \mu_f}{\sigma_f} \\ g' = \dfrac{g - \mu_g}{\sigma_g} \end{cases},$$

where

f represents a grayscale of a reference image, $\mu_f$ represents an average grayscale of the reference image, $\sigma_f$ represents a standard deviation of the reference image, g represents a grayscale of a to-be-spliced image, $\mu_g$ represents an average grayscale of the to-be-spliced image, and $\sigma_g$ represents a standard deviation of the to-be-spliced image.

A method for the image registration may be a block matching algorithm, an image registration method based on fast Fourier Transform, a phase correlation image registration method based on Fourier Transform, an algorithm based on a contour feature, a corner detection algorithm, a scale-invariant feature transform (Scale-invariant feature transform, SIFT) algorithm, a speeded up robust features (Speeded Up Robust Features, SURF) algorithm, an optical flow based method, or an SIFT flow based method. A corresponding location of the to-be-spliced image may be determined by using a registration algorithm, re-sampling is performed after a transform relationship among images is determined, and then the images may be spliced. An image transform model may be image translation, rotation, scaling, reflection, or shearing, or any combination of them.

970. Display the generated refocused image of the multiple depth planes. Step 970 is similar to step 270 in FIG. 2, and details are not described herein.

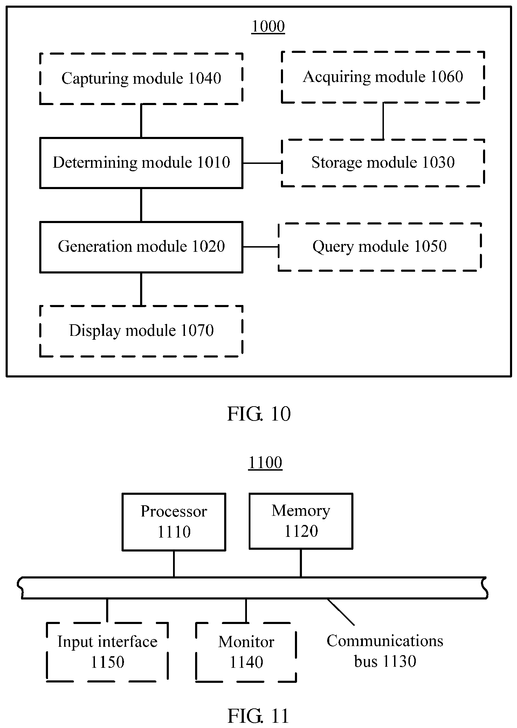

The image processing method and process according to the embodiments of the present invention are described in the foregoing. An image processing apparatus according to the embodiments of the present invention is described in the following with reference to FIG. 10 and FIG. 11 separately.

FIG. 10 is a schematic structural diagram of an image processing apparatus 1000 according to an embodiment of the present invention. The image processing apparatus 1000 includes a determining module 1010 and a generation module 1020.

The determining module 1010 is configured to determine depth information of multiple depth planes, where the depth information of the multiple depth planes is used to indicate the multiple depth planes, the multiple depth planes are respectively corresponding to multiple refocused images of the multiple depth planes, and the multiple refocused images are generated based on raw data of the multiple refocused images. The generation module 1020 is configured to generate a refocused image of the multiple depth planes according to the depth information, where the refocused image of the multiple depth planes includes focused parts of the multiple refocused images.

According to this embodiment of the present invention, the multiple depth planes are respectively corresponding to the raw data of the multiple refocused images; and the generation module 1020 determines the raw data of the multiple refocused images according to the depth information of the multiple depth planes, and generates the refocused image of the multiple depth planes according to the raw data of the multiple refocused images, where the refocused image of the multiple depth planes includes the focused parts of the multiple refocused images.

The generation module 1020 performs refocusing processing based on the raw data of the multiple refocused images by using a refocusing algorithm, so as to generate the multiple refocused images, and combines the multiple refocused images, so as to generate the refocused image of the multiple depth planes.

According to this embodiment of the present invention, the generation module 1020 combines the focused parts of the multiple refocused images by using an image fusion method.

According to this embodiment of the present invention, the generation module 1020 determines a point spread function of pixels of the multiple refocused images, generates a fusion weight template according to the point spread function of the pixels, and performs image fusion on the multiple refocused images according to the fusion weight template, where the fusion weight template includes fusion weights of the pixels, and a fusion weight of a pixel of a high focusing degree is greater than a fusion weight of a pixel of a low focusing degree.

According to this embodiment of the present invention, the generation module 1020 captures focused parts and non-focused parts from each refocused image in the multiple refocused images, and splices the focused parts and the non-focused parts.

According to this embodiment of the present invention, the generation module 1020 determines the raw data of the multiple refocused images according to the depth information of the multiple depth planes, generates, according to the raw data of the multiple refocused images, focused parts and non-focused parts that are of each refocused image in the multiple refocused images, and splices the focused parts and the non-focused parts.

According to this embodiment of the present invention, the generation module 1020 further generates, according to raw data of refocused images of all depth planes, the refocused images corresponding to all the depth planes, where all the depth planes are respectively corresponding to the refocused images of all the depth planes. The generation module 1020 selects the refocused images of the multiple depth planes from the refocused images of all the depth planes according to the depth information of the multiple depth planes, and generates the refocused image of the multiple depth planes according to the refocused images of the multiple depth planes, where the refocused image of the multiple depth planes includes the focused parts of the multiple refocused images.

According to this embodiment of the present invention, the generation module 1020 determines a point spread function of pixels of all the refocused images, generates a fusion weight template according to the point spread function of the pixels of all the refocused images, and performs image fusion on all the refocused images according to the fusion weight template, where the fusion weight template includes fusion weights of the pixels of all the refocused images, fusion weights of pixels of the multiple refocused images are greater than fusion weights of pixels of other refocused images except the multiple refocused images in all the refocused images, and a fusion weight of a pixel of a high focusing degree in the multiple refocused images is greater than a fusion weight of a pixel of a low focusing degree in the multiple refocused images.

According to this embodiment of the present invention, the generation module 1020 selects focused parts and non-focused parts from each refocused image in the multiple refocused images, and splices the focused parts and the non-focused parts.

Optionally, in another embodiment, the image processing apparatus 1000 further includes: a storage module 1030, a selection module 1040, and a query module 1050. The selection module 1040 is configured to select focused parts and non-focused parts from each refocused image in all the refocused images. The storage module 1030 is configured to respectively store the focused parts and the non-focused parts into query tables by using a depth of a depth plane or pixel coordinates as an index. The query module 1050 queries the focused parts and non-focused parts that are of the refocused images of the multiple depth planes from the query tables by using the depth of the depth plane or the pixel coordinates as the index. The generation module 1020 splices the focused parts and the non-focused parts that are of the refocused images of the multiple depth planes.

According to this embodiment of the present invention, the generation module 1020 performs pre-processing, image registration, and image fusion on images of the focused parts and images of the non-focused parts when performing the splicing.

Optionally, in another embodiment, the image processing apparatus 1000 further includes: a display module 1070, configured to display a refocused image in the multiple refocused images; and an acquiring module 1060, configured to acquire multiple user inputs in multiple regions of the displayed refocused image, where the multiple user inputs are corresponding to the multiple depth planes. The display module 1070 outputs the refocused image of the multiple depth planes on a display device. The determining module 1010 determines the depth information of the multiple depth planes according to the multiple user inputs.

According to this embodiment of the present invention, the user inputs are one of the following: single-point tap inputs, multi-point tap inputs, single-point sliding inputs, or multi-point sliding inputs on a touchscreen by a user; user postures probed by a posture sensor on an input device; or user actions probed by an action tracking module on an input device.

Optionally, in another embodiment of the present invention, the determining module 1010 determines, according to a predefined input, the multiple depth planes corresponding to the predefined input. The image processing apparatus 1000 further includes: a display module 1030, configured to output, on a display device, the refocused image of the multiple depth planes corresponding to the predefined input.

For an operation and a function of each unit of the image processing apparatus 1000, reference may be made to the method in FIG. 1. To avoid repetition, details are not described herein.

FIG. 11 is a schematic structural diagram of an image processing apparatus 1100 according to another embodiment of the present invention. The image processing apparatus 1100 includes: a processor 1110, a memory 1120, and a communications bus 1130.

By invoking code stored in the memory 1120 by using the communications bus 1130, the processor 1110 is configured to: determine depth information of multiple depth planes, where the depth information of the multiple depth planes is used to indicate the multiple depth planes, the multiple depth planes are respectively corresponding to multiple refocused images of the multiple depth planes, and the multiple refocused images are generated based on raw data of the multiple refocused images; and generate a refocused image of the multiple depth planes according to the depth information, where the refocused image of the multiple depth planes includes focused parts of the multiple refocused images.

According to this embodiment of the present invention, the multiple depth planes are respectively corresponding to the raw data of the multiple refocused images; and the processor 1110 determines the raw data of the multiple refocused images according to the depth information of the multiple depth planes, and generates the refocused image of the multiple depth planes according to the raw data of the multiple refocused images, where the refocused image of the multiple depth planes includes the focused parts of the multiple refocused images.

According to this embodiment of the present invention, the processor 1110 performs refocusing processing based on the raw data of the multiple refocused images by using a refocusing algorithm, so as to generate the multiple refocused images, and combines the multiple refocused images, so as to generate the refocused image of the multiple depth planes.

According to this embodiment of the present invention, the processor 1110 combines the focused parts of the multiple refocused images by using an image fusion method.

According to this embodiment of the present invention, the processor 1110 determines a point spread function of pixels of the multiple refocused images, generates a fusion weight template according to the point spread function of the pixels, and performs image fusion on the multiple refocused images according to the fusion weight template, where the fusion weight template includes fusion weights of the pixels, and a fusion weight of a pixel of a high focusing degree is greater than a fusion weight of a pixel of a low focusing degree.

According to this embodiment of the present invention, the processor 1110 selects focused parts and non-focused parts from each refocused image in the multiple refocused images, and splices the focused parts and the non-focused parts.

According to this embodiment of the present invention, the processor 1110 determines the raw data of the multiple refocused images according to the depth information of the multiple depth planes, generates, according to the raw data of the multiple refocused images, focused parts and non-focused parts that are of each refocused image in the multiple refocused images, and splices the focused parts and the non-focused parts.

According to this embodiment of the present invention, the processor 1110 further generates, according to raw data of refocused images of all depth planes, the refocused images corresponding to all the depth planes, where all the depth planes are respectively corresponding to the refocused images of all the depth planes. The processor 1110 selects the refocused images of the multiple depth planes from the refocused images of all the depth planes according to the depth information of the multiple depth planes, and generates the refocused image of the multiple depth planes according to the refocused images of the multiple depth planes, where the refocused image of the multiple depth planes includes the focused parts of the multiple refocused images.

According to this embodiment of the present invention, the processor 1110 determines a point spread function of pixels of all the refocused images, generates a fusion weight template according to the point spread function of the pixels of all the refocused images, and performs image fusion on all the refocused images according to the fusion weight template, where the fusion weight template includes fusion weights of the pixels of all the refocused images, fusion weights of pixels of the multiple refocused images are greater than fusion weights of pixels of other refocused images except the multiple refocused images in all the refocused images, and a fusion weight of a pixel of a high focusing degree

14

in the multiple refocused images is greater than a fusion weight of a pixel of a low focusing degree in the multiple refocused images.

According to this embodiment of the present invention, the processor 1110 selects focused parts and non-focused parts from each refocused image in the multiple refocused images, and splices the focused parts and the non-focused parts.

According to this embodiment of the present invention, the processor 1110 performs pre-processing, image registration, and image fusion on images of the focused parts and images of the non-focused parts when performing the splicing.

Optionally, in another embodiment, the image processing apparatus 1100 further includes: a monitor 1140, configured to display a refocused image in the multiple refocused images; and an input interface 1150, configured to acquire multiple user inputs in multiple regions of the displayed refocused image, where the multiple user inputs are corresponding to the multiple depth planes. The monitor 1140 outputs the generated refocused image of the multiple depth planes. The processor 1110 determines the depth information of the multiple depth planes according to the multiple user inputs.

According to this embodiment of the present invention, the user inputs are one of the following: single-point tap inputs, multi-point tap inputs, single-point sliding inputs, or multi-point sliding inputs on a touchscreen of the monitor 1140 by a user; user postures probed by a posture sensor on an input device; or user actions probed by an action tracking module on an input device.

Optionally, in another embodiment, the processor 1110 determines, according to a predefined input, the multiple depth planes corresponding to the predefined input. The image processing apparatus further includes: a monitor 1140, configured to output, on a display device, the refocused image of the multiple depth planes corresponding to the predefined input.

For an operation and a function of each unit of the image processing apparatus 1100, reference may be made to the method in FIG. 1. To avoid repetition, details are not described herein.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the appended claims, as long as this implementation falls under the scope of the appended claims.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the scope of the appended claims.

**Claims**

1. An image processing apparatus, comprising:

   a determining module, configured to determine depth information of multiple depth planes, wherein the depth information of the multiple depth planes is used to indicate the multiple depth planes, and the multiple depth planes are respectively corresponding to multiple refocused images of the multiple depth planes; and
   a generation module, configured to generate a refocused image of the multiple depth planes ;
   wherein the multiple depth planes are respectively corresponding to raw data of the multiple refocused images;
   wherein the raw data of the multiple refocused images have been obtained by means of shooting by a camera module of a scene ; and
   the generation module determines the raw data of the multiple refocused images according to the depth information of the multiple depth planes;
   wherein the generation module performs refocusing processing based on the raw data of the multiple refocused images by using a refocusing algorithm, so as to generate the multiple refocused images;
   wherein the generation module, so as to generate the refocused image of the multiple depth planes, randomly selects one refocused image from the multiple refocused images, and fuses the focused parts of the remaining multiple refocused images corresponding to the multiple depth planes with the selected refocused image, by using an image fusion method;
   wherein the generation module determines a point spread function of pixels of the multiple refocused images, generates a fusion weight template according to the point spread function of the pixels, and performs image fusion on the multiple refocused images according to the fusion weight template, wherein the fusion weight template comprises fusion weights of the pixels, and a fusion weight of a pixel of a high focusing degree is greater than a fusion weight of a pixel of a low focusing degree.

2. The image processing apparatus according to claim 1, wherein the generation module further generates, according to raw data of refocused images of all depth planes, the refocused images corresponding to all the depth planes, selects the refocused images of the multiple depth planes from the refocused images of all the depth planes according to the depth information of the multiple depth planes, and generates the refocused image of the multiple depth planes according to the refocused images of the multiple depth planes, and the refocused image of the multiple depth planes comprises the focused parts of the refocused images of the multiple depth planes.

3. The image processing apparatus according to claim 2, wherein the generation module determines a point spread function of pixels of all the refocused images, generates a fusion weight template according to the point spread function of the pixels of all the refocused images, and performs image fusion on all the refocused images according to the fusion weight template, wherein the fusion weight template comprises fusion weights of the pixels of all the refocused images, fusion weights of pixels of the multiple refocused images are greater than fusion weights of pixels of other refocused images except the multiple refocused images in all the refocused images, and a fusion weight of a pixel of a high focusing degree in the multiple refocused images is greater than a fusion weight of a pixel of a low focusing degree in the multiple refocused images.

4. The image processing apparatus according to claim 2, wherein the generation module selects focused parts and non-focused parts from each refocused image in the refocused images of the multiple depth planes, and splices the focused parts and the non-focused parts.

5. The image processing apparatus according to claim 2, further comprising:
   a query module, configured to query the focused parts and non-focused parts that are of the refocused images of the multiple depth planes from query tables by using a depth of a depth plane or pixel coordinates as an index, wherein the focused parts and the non-focused parts are stored in the query tables by using the depth of the depth plane or the pixel coordinates as the index, and the generation module splices the focused parts and the non-focused parts that are of the refocused images of the multiple depth planes.

6. The image processing apparatus according to any one of claims 4 and 5, wherein the generation module performs pre-processing, image registration, and image fusion on images of the focused parts and images of the non-focused parts when performing the splicing.

7. The image processing apparatus according to any one of claims 1 to 6, further comprising:

a display module, configured to display a refocused image in the multiple refocused images; and
an acquiring module, configured to acquire multiple user inputs in multiple regions of the displayed refocused image, wherein the multiple user inputs are corresponding to the multiple depth planes, the display module outputs the generated refocused image of the multiple depth planes on a display device, and the determining module determines the depth information of the multiple depth planes according to the multiple user inputs.

8. The image processing apparatus according to claim 7, wherein the user inputs are one of the following: single-point tap inputs, multi-point tap inputs, single-point sliding inputs, or multi-point sliding inputs on a touchscreen by a user; user postures probed by a posture sensor on an input device; or user actions probed by an action tracking module on an input device.

9. The image processing apparatus according to any one of claims 1 to 8, wherein the determining module determines, according to a predefined input, the multiple depth planes corresponding to the predefined input, and the image processing apparatus further comprises:
the display module, configured to output, on a display device, the refocused image of the multiple depth planes corresponding to the predefined input.

**Patentansprüche**

1. Bildverarbeitungseinrichtung, umfassend:

ein Bestimmungsmodul, das konfiguriert ist, um Tiefeninformationen von mehreren Tiefenebenen zu bestimmen, wobei die Tiefeninformationen der mehreren Tiefenebenen verwendet werden, um die mehreren Tiefenebenen anzugeben, und die mehreren Tiefenebenen jeweils mehreren refokussierten Bildern der mehreren Tiefenebenen entsprechen; und
ein Erzeugungsmodul, das konfiguriert ist, um ein refokussiertes Bild der mehreren Tiefenebenen zu erzeugen; wobei die mehreren Tiefenebenen jeweils Rohdaten der mehreren refokussierten Bilder entsprechen;
wobei die Rohdaten der mehreren refokussierten Bilder mittels Fotografieren einer Szene durch ein Kameramodul erhalten wurden; und
wobei das Erzeugungsmodul die Rohdaten der mehreren refokussierten Bilder gemäß den Tiefeninformationen der mehreren Tiefenebenen bestimmt;
wobei das Erzeugungsmodul eine Refokussierungsverarbeitung basierend auf den Rohdaten der mehreren refokussierten Bilder unter Verwendung eines Refokussierungsalgorithmus durchführt, um die mehreren refokussierten Bilder zu erzeugen;
wobei das Erzeugungsmodul, um das refokussierte Bild der mehreren Tiefenebenen zu erzeugen, wahllos ein refokussiertes Bild aus den mehreren refokussierten Bildern auswählt und die fokussierten Teile der verbleibenden mehreren refokussierten Bilder, die den mehreren Tiefenebenen entsprechen, durch Verwenden eines Bildfusionsverfahrens mit dem ausgewählten refokussierten Bild fusioniert;
wobei das Erzeugungsmodul eine Punktstreufunktion von Pixeln der mehreren refokussierten Bilder bestimmt, eine Fusionsgewichtungsvorlage gemäß der Punktstreufunktion der Pixel erzeugt und eine Bildfusion an den mehreren refokussierten Bildern gemäß der Fusionsgewichtungsvorlage durchführt, wobei die Fusionsgewichtungsvorlage Fusionsgewichtungen der Pixel umfasst und eine Fusionsgewichtung eines Pixels eines hohen Fokussiergrads größer als eine Fusionsgewichtung eines Pixels eines niedrigen Fokussiergrads ist.

2. Bildverarbeitungseinrichtung nach Anspruch 1, wobei das Erzeugungsmodul ferner, gemäß Rohdaten von refokussierten Bildern aller Tiefenebenen, die refokussierten Bilder erzeugt, die allen Tiefenebenen entsprechen, die refokussierten Bilder der mehreren Tiefenebenen aus den refokussierten Bildern all der Tiefenebenen gemäß den Tiefeninformationen der mehreren Tiefenebenen auswählt und das refokussierte Bild der mehreren Tiefenebenen gemäß den refokussierten Bildern der mehreren Tiefenebenen erzeugt, und wobei das refokussierte Bild der mehreren Tiefenebenen die fokussierten Teile der refokussierten Bilder der mehreren Tiefenebenen umfasst.

3. Bildverarbeitungseinrichtung nach Anspruch 2, wobei das Erzeugungsmodul eine Punktstreufunktion von Pixeln von all den refokussierten Bilder bestimmt, eine Fusionsgewichtungsvorlage gemäß der Punktstreufunktion der Pixel all der refokussierten Bildern erzeugt und eine Bildfusion an all den refokussierten Bildern gemäß der Fusionsgewichtungsvorlage durchführt, wobei die Fusionsgewichtungsvorlage Fusionsgewichtungen der Pixel all der refokussierten Bildern umfasst, wobei Fusionsgewichtungen von Pixeln der mehreren refokussierten Bilder größer als Fusionsgewichtungen von Pixeln anderer refokussierten Bilder sind, mit Ausnahme der mehreren refokussierten Bilder in all den refokussierten Bildern, und eine Fusionsgewichtung eines Pixels eines hohen Fokussiergrads in den mehreren refokussierten Bildern größer als eine Fusionsgewichtung eines Pixels eines niedrigen Fokussiergrads in den mehreren refokussierten Bildern ist.

4. Bildverarbeitungseinrichtung nach Anspruch 2, wobei das Erzeugungsmodul fokussierte Teile und nicht fokussierte Teile aus jedem refokussierten Bild in den refokussierten Bildern der mehreren Tiefenebenen auswählt und die fokussierten Teile und die nicht fokussierten Teile zusammenfügt.

5. Bildverarbeitungseinrichtung nach Anspruch 2, ferner umfassend:
ein Abfragemodul, das konfiguriert ist, um die fokussierten Teile und die nicht fokussierten Teile, die zu den refokussierten Bildern der mehreren Tiefenebenen gehören, von Abfragetabellen, unter Verwendung einer Tiefe einer Tiefenebene oder von Pixelkoordinaten als einen Index abzufragen, wobei die fokussierten Teile und die nicht fokussierten Teile in den Abfragetabellen, durch Verwenden der Tiefe der Tiefenebene oder der Pixelkoordinaten als den Index gespeichert werden, und das Erzeugungsmodul die fokussierten Teile und die nicht fokussierten Teile zusammenfügt, die zu den refokussierten Bildern der mehreren Tiefenebenen gehören.

6. Bildverarbeitungseinrichtung nach einem der Ansprüche 4 oder 5, wobei das Erzeugungsmodul eine Vorverarbeitung, eine Bildregistrierung und eine Bildfusion an Bildern der fokussierten Teile und Bildern der nicht fokussierten Teile durchführt, wenn das Zusammenfügen durchgeführt wird.

7. Bildverarbeitungseinrichtung nach einem der Ansprüche 1 bis 6, ferner umfassend:

ein Anzeigemodul, das konfiguriert ist, um ein refokussiertes Bild in den mehreren refokussierten Bildern anzuzeigen; und
ein Erfassungsmodul, das konfiguriert ist, um mehrere Benutzereingaben in mehreren Bereichen des angezeigten refokussierten Bildes zu erfassen, wobei die mehreren Benutzereingaben den mehreren Tiefenebenen entsprechen, wobei das Anzeigemodul das erzeugte refokussierte Bild der mehreren Tiefenebenen auf einer Anzeigevorrichtung ausgibt, und das Bestimmungsmodul die Tiefeninformationen der mehreren Tiefenebenen gemäß den mehreren Benutzereingaben bestimmt.

8. Bildverarbeitungseinrichtung nach Anspruch 7, wobei die Benutzereingaben eine der Folgenden sind:

Eingaben durch Einzelpunkteintippen, Eingaben durch Mehrpunkteintippen, Eingaben durch Einpunktziehen oder Eingaben durch Mehrpunktziehen auf einem Touchscreen durch einen Benutzer;
Benutzerhaltungen, die durch einen Haltungssensor an einer Eingabevorrichtung abgetastet werden; oder
Benutzeraktionen, die durch ein Aktionsverfolgungsmodul an einer Eingabevorrichtung abgetastet werden.

9. Bildverarbeitungseinrichtung nach einem der Ansprüche 1 bis 8, wobei das Bestimmungsmodul gemäß einer vordefinierten Eingabe die mehreren Tiefenebenen bestimmt, die der vordefinierten Eingabe entsprechen, und wobei die Bildverarbeitungseinrichtung ferner umfasst:
das Anzeigemodul, das konfiguriert ist, um auf einer Anzeigevorrichtung das refokussierte Bild der mehreren Tiefenebenen auszugeben, die der vordefinierten Eingabe entsprechen.

## Revendications

1. Appareil de traitement d'image, comprenant :

un module de détermination, configuré pour déterminer des informations de profondeur de multiples plans de profondeur, les informations de profondeur des multiples plans de profondeur étant utilisées pour indiquer les multiples plans de profondeur, et les multiples plans de profondeur correspondant respectivement à de multiples images remises au point des multiples plans de profondeur ; et
un module de génération, configuré pour générer une image remise au point des multiples plans de profondeur ;
dans lequel les multiples plans de profondeur correspondent respectivement à des données brutes des multiples images remises au point ;

dans lequel les données brutes des multiples images remises au point ont été obtenues au moyen d'une prise de vue d'une scène par un module de caméra ; et

le module de génération détermine les données brutes des multiples images remises au point d'après les informations de profondeur des multiples plans de profondeur ;

dans lequel le module de génération effectue un traitement de remise au point basé sur les données brutes des multiples images remises au point à l'aide d'un algorithme de remise au point, de manière à générer les multiples images remises au point ;

dans lequel le module de génération, afin de générer l'image remise au point des multiples plans de profondeur, sélectionne de manière aléatoire une image remise au point parmi les multiples images remises au point et fusionne les parties mises au point des multiples images remises au point restantes correspondant aux multiples plans de profondeur avec l'image remise au point, à l'aide d'un procédé de fusion d'image ;

dans lequel le module de génération détermine une fonction d'étalement de points de pixels parmi les multiples images remises au point, génère un modèle de poids de fusion d'après la fonction d'étalement de points des pixels et effectue une fusion d'images sur les multiples images remises au point d'après le modèle de poids de fusion, dans lequel le modèle de poids de fusion comprend des poids de fusion des pixels, et un poids de fusion d'un pixel d'un degré de mise au point élevé est supérieur à un poids de fusion d'un pixel d'un degré de mise au point faible.

2. Appareil de traitement d'image selon la revendication 1, dans lequel le module de génération génère en outre, d'après des données brutes d'images remises au point de tous les plans de profondeur, les images remises au point correspondant à tous les plans de profondeur, sélectionne les images remises au point des multiples plans de profondeur à partir des images remises au point de tous les plans de profondeur d'après les informations de profondeur des multiples plans de profondeur et génère l'image remise au point des multiples plans de profondeur d'après les images remises au point des multiples plans de profondeur, et l'image remise au point des multiples plans de profondeur comprend les parties mises au point des images remises au point des multiples plans de profondeur.

3. Appareil de traitement d'image selon la revendication 2, dans lequel le module de génération détermine une fonction d'étalement de pixels de toutes les images remises au point, génère un modèle de poids de fusion d'après la fonction d'étalement de pixels de toutes les images remises au point et effectue une fusion d'images sur toutes les images remises au point selon le modèle de poids de fusion, dans lequel le modèle de poids de fusion comprend des poids de fusion de pixels de toutes les images remises au point, des poids de fusion de pixels des multiples images remises au point sont supérieurs aux poids de fusion de pixels d'autres images remises au point à l'exception des multiples images remises au point dans toutes les images remises au point, et un poids de fusion d'un pixel d'un degré de mise au point élevé dans les multiples images remises au point est supérieur à un poids de fusion d'un pixel d'un degré de mise au point faible dans les multiples images remises au point.

4. Appareil de traitement d'image selon la revendication 2, dans lequel le module de génération sélectionne les parties mises au point et les parties non mises au point de chaque image remise au point dans les images remises au point des multiples plans de profondeur, et joint les parties mises au point et les parties non mises au point.

5. Appareil de traitement d'image selon la revendication 2, comprenant en outre :
un module de requête, configuré pour interroger les parties mises au point et les parties non mises au point qui sont des images remises au point des multiples plans de profondeur à partir de tables de requête, à l'aide d'une profondeur d'un plan de profondeur ou des coordonnées de pixel comme indice, les parties mises au point et les parties non mises au point étant stockées dans les tables de requête à l'aide de la profondeur du plan de profondeur ou des coordonnées du pixel comme indice, et le module de génération joignant les parties mises au point et les parties non mises au point des images remises au point des multiples plans de profondeur.

6. Appareil de traitement d'image selon l'une quelconque des revendications 4 et 5, dans lequel le module de génération effectue un prétraitement, un enregistrement d'image et une fusion d'image sur des images des parties mises au point et des images des parties non mises au point lors de la jonction.

7. Appareil de traitement d'image selon l'une quelconque des revendications 1 à 6, comprenant en outre :

un module d'affichage, configuré pour afficher une image remise au point dans les multiples images remises au point ; et

un module d'acquisition, configuré pour acquérir de multiples entrées utilisateur dans de multiples régions de l'image remise au point affichée, dans lequel les multiples entrées correspondent aux multiples plans de profondeur, le module d'affichage produit en sortie l'image remise au point générée des multiples plans de profondeur sur un dispositif d'affichage, et le module de détermination détermine les informations de profondeur des multiples plans de profondeur d'après les multiples entrées utilisateur.

8. Appareil de traitement d'image selon la revendication 7, dans lequel les entrées utilisateur sont l'une des suivantes :

des entrées de prise monopoint, des entrées de prise multipoint, des entrées coulissantes à point unique ou des entrées coulissantes multipoint sur un écran tactile par un utilisateur ;
des postures utilisateur sondées par un capteur de posture sur un dispositif d'entrée ; ou
des actions utilisateur sondées par un module de suivi d'actions sur un dispositif d'entrée.

9. Appareil de traitement d'image selon l'une quelconque des revendications 1 à 8, dans lequelle module de détermination détermine, d'après une entrée prédéfinie, les multiples plans de profondeur correspondant à l'entrée prédéfinie, et l'appareil de traitement d'image comprend en outre :
le module d'affichage, configuré pour délivrer, sur un dispositif d'affichage, l'image remise au point des multiples plans de profondeur correspondant à l'entrée prédéfinie.

Determine depth information of multiple depth planes, where the depth information of the multiple depth planes is used to indicate the multiple depth planes, the multiple depth planes are respectively corresponding to multiple refocused images of the multiple depth planes, and the multiple refocused images are generated based on raw data of the multiple refocused images — 110

Generate a refocused image of the multiple depth planes according to the depth information, where the refocused image of the multiple depth planes includes focused parts of the multiple refocused images — 120

FIG. 1

```
┌─────────────────────────────────────────────────────────────┐        210
│            Display an image on a user interface              │╱──
└─────────────────────────────────────────────────────────────┘
                             │
┌─────────────────────────────────────────────────────────────┐        220
│           Acquire user inputs on the user interface          │╱──
└─────────────────────────────────────────────────────────────┘
                             │
┌─────────────────────────────────────────────────────────────┐        230
│  Determine depth information of multiple depth planes         │╱──
│  according to the user inputs                                 │
└─────────────────────────────────────────────────────────────┘
                             │
┌─────────────────────────────────────────────────────────────┐        240
│  Determine corresponding raw data according to the           │╱──
│  determined depth information                                 │
└─────────────────────────────────────────────────────────────┘
                             │
┌─────────────────────────────────────────────────────────────┐        250
│  Perform, based on the determined raw data, a refocusing      │╱──
│  operation to generate refocused images of the different      │
│  depth planes                                                 │
└─────────────────────────────────────────────────────────────┘
                             │
┌─────────────────────────────────────────────────────────────┐        260
│  Combine the multiple refocused images, so as to obtain a     │╱──
│  refocused image of the multiple depth planes                 │
└─────────────────────────────────────────────────────────────┘
                             │
┌─────────────────────────────────────────────────────────────┐        270
│  Display the generated refocused image of the multiple        │╱──
│  depth planes                                                 │
└─────────────────────────────────────────────────────────────┘
```

FIG. 2

Depth interval 1    Depth interval 2

0                                    ∞

FIG. 3

(u,v)                    (s,t)

FIG. 4

u         u'         s'         s

Master
lens      Synthetic
aperture      Synthetic
image plane      Micro lens
plane

## FIG. 5

u        u'        s'      s

$$\frac{u'-s'}{\delta}$$

$$u'-s'$$

$$s'-u'$$

$$\frac{s'-u'}{\gamma}$$

$$F$$

$$\alpha \cdot F$$

$$\beta \cdot F$$

$$(\alpha+\beta-1)\cdot F$$

## FIG. 6

Display an image on a user interface ⌐ 710

Acquire user inputs on the user interface ⌐ 720

Determine corresponding depth information according to the user inputs ⌐ 730

Perform, based on raw data, a refocusing operation by using the depth information, so as to generate refocused images of different depth planes ⌐ 740

Determine a point spread function of pixels of the multiple refocused images ⌐ 745

Generate a fusion weight template according to the point spread function of the pixels ⌐ 750

Perform image fusion on the multiple refocused images according to the fusion weight template ⌐ 760

Display a generated refocused image of the multiple depth planes ⌐ 770

FIG. 7

```
┌─────────────────────────────────────────────────────┐
│         Display an image on a user interface          │─── 810
└─────────────────────────────────────────────────────┘
                         │
┌─────────────────────────────────────────────────────┐
│         Acquire user inputs on the user interface     │─── 820
└─────────────────────────────────────────────────────┘
                         │
┌─────────────────────────────────────────────────────┐
│   Determine corresponding depth information according  │─── 830
│               to the user inputs                       │
└─────────────────────────────────────────────────────┘
                         │
┌─────────────────────────────────────────────────────┐
│   Perform, based on raw data, a refocusing operation   │─── 840
│   by using the depth information, so as to generate    │
│   refocused images of different depth planes           │
└─────────────────────────────────────────────────────┘
                         │
┌─────────────────────────────────────────────────────┐
│   Determine fusion weights of the multiple depth       │─── 850
│   planes according to focusing degrees of pixel        │
│   intervals corresponding to the multiple depth planes │
└─────────────────────────────────────────────────────┘
                         │
┌─────────────────────────────────────────────────────┐
│   Perform image fusion on the multiple refocused       │─── 860
│   images according to the fusion weights of the        │
│   multiple depth planes                                │
└─────────────────────────────────────────────────────┘
                         │
┌─────────────────────────────────────────────────────┐
│   Display a generated refocused image of the multiple  │─── 870
│   depth planes                                         │
└─────────────────────────────────────────────────────┘
```

FIG. 8

```
┌─────────────────────────────────────────────────────────┐
│         Display an image on a user interface            │ ── 910
└─────────────────────────────────────────────────────────┘
                          │
┌─────────────────────────────────────────────────────────┐
│        Acquire user inputs on the user interface        │ ── 920
└─────────────────────────────────────────────────────────┘
                          │
┌─────────────────────────────────────────────────────────┐
│   Determine corresponding depth information according    │ ── 930
│              to the user inputs                          │
└─────────────────────────────────────────────────────────┘
                          │
┌─────────────────────────────────────────────────────────┐
│  Perform, based on raw data, a refocusing operation by   │ ── 940
│  using the depth information, so as to generate refocused│
│       images of different depth planes                   │
└─────────────────────────────────────────────────────────┘
                          │
┌─────────────────────────────────────────────────────────┐
│  Capture focused parts and non-focused parts from the    │ ── 945
│ refocused images of the different depth planes, and store│
│  the focused parts and the non-focused parts in a focused│
│   part query table and a non-focused part query table    │
│                    respectively                          │
└─────────────────────────────────────────────────────────┘
                          │
┌─────────────────────────────────────────────────────────┐
│ Determine, according to the depth information, a depth of│ ── 950
│ a depth plane or pixel coordinates of each user input,   │
│ and obtain, by querying the query tables according to the│
│ depth of the depth plane or the pixel coordinates, the   │
│ focused parts and the non-focused parts that are of the  │
│     depth planes corresponding to the user inputs        │
└─────────────────────────────────────────────────────────┘
                          │
┌─────────────────────────────────────────────────────────┐
│  Combine the focused parts and the non-focused parts that│ ── 960
│  are corresponding to the multiple depth planes into a   │
│   refocused image of the multiple depth planes           │
└─────────────────────────────────────────────────────────┘
                          │
┌─────────────────────────────────────────────────────────┐
│ Display the generated refocused image of the multiple    │ ── 970
│                    depth planes                          │
└─────────────────────────────────────────────────────────┘
```

FIG. 9

27

1000

Capturing module 1040

Acquiring module 1060

Determining module 1010

Storage module 1030

Generation module 1020

Query module 1050

Display module 1070

FIG. 10

1100

Processor 1110

Memory 1120

Input interface 1150

Monitor 1140

Communications bus 1130

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Digital light field photography. Dissertation Department of Computer Science. Stanford University, 01 July 2006
- **KEITA TAKAHASHI et al.** All in-Focus View Synthesis from Under-Sampled Light Fields. *Proceedings of ICAT 2003,* 03 December 2003
- Efficient Reconstruction of All-in-Focus Images Through Shifted Pinholes From Multi-Focus Images for Dense Light Field Synthesis and Rendering. IEEE Transactions on Image Processing. IEEE Service Center, 01 November 2013, vol. 22
- **PERTUZ et al.** Generation of All-in-Focus Images by Noise-Robust Selective Fusion of Limited Depth-of-Field Images. *IEEE 1RANSACTIONS ON IMAGE PROCESSING,* March 2013, vol. 22
- Registration and blur estimation methods for multiple differently focused images. **KUBOTA et al.** IMAGE PROCESSING. 1999. ICIP 99. PROCEEDINGS. 1999 INTERNATIONAL CONFERENCE ON - KOBE. JAPAN 24-28 OCT 1999. IEEE PISCATAWAY, 24 October 1999, vol. 2